# EUROPÄISCHE PATENTSCHRIFT

(11) **EP 3 660 338 B1**
(45) Veröffentlichungstag und Bekanntmachung des Hinweises auf die Patenterteilung: **23.04.2025**
(21) Anmeldenummer: 19212020.2
(22) Anmeldetag: 28.11.2019
(51) Int. Cl.: F16B 5/02, F16B 5/06

(54) **TOLERANZAUSGLEICHSVORRICHTUNG MIT KOPPLUNGSMITTEL**
TOLERANCE COMPENSATING DEVICE WITH COUPLING MEANS
DISPOSITIF DE COMPENSATION DE TOLÉRANCE DOTÉ D'UN MOYEN DE COUPLAGE

(30) Priorität: 29.11.2018 DE 102018130391
(43) Veröffentlichungstag der Anmeldung: 03.06.2020
(73) Patentinhaber: Witte Automotive GmbH, 42551 Velbert (DE)
(72) Erfinder: Erpenbeck, Till, 42555 Velbert (DE)
(74) Vertreter: Manitz Finsterwald Patent- und Rechtsanwaltspartnerschaft mbB

(56) Entgegenhaltungen:
- EP-A1- 0 886 071
- EP-A1- 3 242 043
- EP-B1- 0 886 071
- US-A- 4 529 244

## Beschreibung

Die vorliegende Erfindung betrifft eine Vorrichtung zum Ausgleichen von Toleranzen zwischen zwei mittels einer Verbindungsschraube zu verbindenden Bauteilen, umfassend ein Grundelement und ein aus dem Grundelement herausbewegbares Ausgleichselement, wobei das Grundelement und das Ausgleichselement einen eine axiale Richtung definierenden Durchgang für die Verbindungsschraube ausbilden.

Eine derartige Vorrichtung, welche auch Toleranzausgleichsvorrichtung genannt wird, ist beispielsweise aus der EP 0 886 071 A1 bekannt und dient beispielsweise im Automobilbau dazu, Toleranzen im Abstand zwischen einem ersten Bauteil, z.B. einer Trägerstruktur, Karosserie oder dergleichen, und einem daran zu montierenden zweiten Bauteil, z.B. einer Dachreling, Instrumententafel, Tür, Motorhaube, einem Sitz, Kofferraumdeckel oder dergleichen, in axialer Richtung zu kompensieren. Die Vorrichtung kann dabei, je nach Montagevorgabe, wahlweise an dem ersten Bauteil oder an dem zweiten Bauteil vormontiert werden. Hierzu wird die Vorrichtung über das Grundelement beispielsweise an dem ersten Bauteil befestigt. Anschließend wird das Ausgleichselement nach oben in Richtung des zweiten Bauteils aus dem Grundelement herausbewegt, bis die Stirnfläche des Ausgleichselements an dem zweiten Bauteil zur Anlage kommt. Mittels der sich durch die Bauteile und die Vorrichtung hindurch erstreckenden Verbindungsschraube können die Bauteile nun miteinander verspannt werden.

Eine Bewegung des Ausgleichselements aus dem Grundelement heraus kann beispielsweise dadurch erfolgen, dass das Ausgleichselement aus dem Grundelement herausgedreht wird. Zu diesem Zweck können das Grundelement und das Ausgleichselement in Gewindeeingriff stehen, vorzugsweise in einem Linksgewindeeingriff, sodass das Ausgleichselement automatisch aus dem Grundelement herausgedreht wird, wenn die Verbindungsschraube in ein zugeordnetes Mutternelement eingeschraubt wird. Zur Übertragung eines Drehmoments von der Verbindungsschraube auf das Ausgleichselement ist üblicherweise ein Drehmomentübertragungsmittel, beispielsweise in Form eines Federelements, in dem Durchgang des Ausgleichselements vorgesehen.

Vor ihrem bestimmungsgemäßen Gebrauch werden die Vorrichtungen in einem Vorratsbehälter vorrätig gehalten, in welchem sie üblicherweise beliebig ausgerichtet vorliegen. Um eine Vorrichtung in gewünschter Weise montieren zu können, ist eine korrekte Ausrichtung der Vorrichtung bezüglich des ersten Bauteils nötig. Dies geschieht bislang durch einen manuellen Setzvorgang, bei welchem eine Vorrichtung aus dem Vorratsbehälter entnommen und anschließend händisch an dem ersten Bauteil befestigt wird. Eine derartige Vorgehensweise ist daher zeitaufwendig und letztlich auch kostenintensiv.

Der Erfindung liegt die Aufgabe zugrunde, eine Vorrichtung zum Ausgleichen von Toleranzen zu schaffen, welche sich für einen automatisierten Setzvorgang eignet.

Zur Lösung der Aufgabe ist eine Vorrichtung zum Ausgleichen von Toleranzen mit den Merkmalen des Anspruchs 1 vorgesehen. Die erfindungsgemäße Toleranzausgleichsvorrichtung zeichnet sich durch ein Kopplungsmittel aus, welches dazu ausgebildet ist, die Vorrichtung mit einem Trägerelement zu koppeln und die Vorrichtung entlang des Trägerelements zu führen.

Der Erfindung liegt der allgemeine Gedanke zugrunde, eine Toleranzausgleichsvorrichtung mit einem Kopplungsmittel zu versehen, welches die Kopplung der Toleranzausgleichsvorrichtung mit einem Trägerelement ermöglicht, durch welches die Toleranzausgleichsvorrichtung korrekt ausgerichtet einem Setzroboter zugeführt werden kann, damit dieser die Toleranzausgleichsvorrichtung in der gewünschten Weise an einem ersten der zu verbindenden Bauteilen anbringt. Hierdurch lässt sich der Setzvorgang automatisieren, wodurch der Setzvorgang im Vergleich zu einem manuellen Setzvorgang einfacher, exakter, reproduzierbarer und letztendlich auch kostengünstiger durchführbar ist.

Ein weiterer Vorteil der Erfindung besteht darin, dass die Vorrichtungen mit Hilfe des Kopplungsmittels geordnet, d.h. definiert ausgerichtet, in einem Magazin gelagert und geführt werden können. Eine derartige Lagerung kann selbst bei einem manuellen Setzvorgang vorteilhaft sein, da die Vorrichtungen jeweils in korrekt ausgerichteter Weise von dem Magazin entnommen werden können.

Vorteilhafte Ausbildungen der Erfindung sind den Unteransprüchen, der Beschreibung und der Zeichnung zu entnehmen.

Gemäß einer besonders einfachen Ausgestaltung der Vorrichtung ist das Kopplungsmittel an dem Grundelement ausgebildet. Dabei kann das Grundelement zum Befestigen der Vorrichtung an dem ersten Bauteil mindestens ein Befestigungsmittel aufweisen, welches beispielsweise in Form eines Halteclips, Rastabschnitts, Klemmmittels oder dergleichen ausgebildet sein kann.

Alternativ kann das Kopplungsmittel auch an einem Halteelement zum Halten des Grundelements ausgebildet sein. Ebenso wie das Grundelement kann auch das Halteelement mindestens ein Befestigungsmittel der voranstehend beschriebenen Art aufweisen.

Darüber hinaus ist es auch denkbar, das Kopplungsmittel nicht an dem Grundelement oder Halteelement vorzusehen, sondern an dem Ausgleichselement.

Es versteht sich, dass das Grundelement bzw. das Halteelement zusätzlich oder alternativ zu einer kraft- und/oder formschlüssigen Befestigung auch stoffschlüssig an dem ersten Bauteil befestigt werden kann, z.B. indem es an dem ersten Bauteil festgeschweißt oder festgeklebt wird.

Eine besonders vorteilhafte Ausrichtung für einen anschließenden Setzvorgang erfährt die mit dem Trägerelement gekoppelte Vorrichtung, wenn das Kopplungsmittel eine Längserstreckung aufweist, welche zumindest annähernd parallel zur axialen Richtung ausgerichtet ist. Grundsätzlich kann die Längserstreckung des Kopplungsmittels je nach Anwendungsfall aber auch quer, insbesondere rechtwinklig, zur axialen Richtung ausgerichtet sein.

Gemäß einer Ausführungsform umfasst das Kopplungsmittel eine mindestens einen Hinterschnitt definierende Nut. Hierdurch kann das Kopplungsmittel eine komplementär ausgebildete Rippe des Trägerelements hintergreifen und die Vorrichtung in beliebigen Raumrichtungen geführt werden, ohne dass sich die Vorrichtung dabei von dem Trägerelement in ungewollter Weise ablöst. Besonders gut lässt sich die Rippe des Trägerelements hintergreifen, wenn die Nut eine T-Nut, eine L-Nut, eine Rundnut, eine Schwalbenschwanznut oder dergleichen ist.

Damit die Vorrichtung leicht mit dem Trägerelement in Eingriff gebracht werden kann, weist die Nut vorteilhafterweise an mindestens einem ihrer Längsenden einen sich aufweitenden Abschnitt auf. Das sich aufweitende Längsende der Nut erleichtert gewissermaßen ein Auffädeln der Vorrichtung auf das Trägerelement. Das Längsende der Nut befindet sich dabei an einem das Kopplungsmittel in Richtung dessen Längserstreckung begrenzenden Längsende des Kopplungsmittels.

Anstelle einer Nut kann das Kopplungsmittel auch einen mindestens einen Hinterschnitt definierenden Arm umfassen, welcher sich von einer Außenwand des Grundelements oder einer Außenwand des Halteelements radial oder tangential wegerstreckt. Es versteht sich, dass das Trägerelement in diesem Fall eine komplementär ausgebildete Nut aufweist, welche den Hinterschnitt des Arms zur Kopplung der Vorrichtung mit dem Trägerelement hintergreift.

Damit die Vorrichtung leicht mit dem Trägerelement in Eingriff gebracht, d.h. also leicht auf das Trägerelement aufgefädelt werden kann, weist das Kopplungsmittel an mindestens einem seiner Längsenden vorzugsweise einen sich verjüngenden Abschnitt auf. Dabei begrenzt das Längsende das Kopplungsmittel in Richtung seiner Längserstreckung.

Ein besonders guter Eingriff zwischen Vorrichtung und Trägerelement lässt sich dadurch erreichen, dass der Arm an seinem der Außenwand des Grundelements bzw. der Außenwand des Halteelements abgewandten freien Ende in mindestens einen abgewinkelten Hakenabschnitt übergeht, so dass das Kopplungsmittel insgesamt beispielsweise einen T-förmigen oder L-förmigen Querschnitt aufweist. Der Arm kann an seinem der Außenwand des Grundelements bzw. der Außenwand des Halteelements abgewandten freien Ende anstelle eines Hakenabschnitts auch einen andersartig ausgestalteten hinterschnittenen Endabschnitt aufweisen, beispielsweise derart, dass das Kopplungsmittel einen runden, insbesondere pilzartigen, einen schwalbenschwanzartigen oder vergleichbar ausgestalteten Querschnitt aufweist.

Weist das Kopplungsmittel einen Arm mit einem Hakenabschnitt oder einem andersartig hinterschnittenen Endabschnitt auf, so bildet das Kopplungsmittel in gewisser Hinsicht einen Nutenstein, welcher im gekoppelten Zustand der Vorrichtung in einer Nut des Trägerelements geführt werden kann.

Damit ein Setzroboter die Vorrichtung besser greifen kann, aber auch zur exakten Positionierung sowie Ausrichtung der Vorrichtung mittels des Setzroboters, ist erfindungsgemäß ein Führungselement an dem Kopplungsmittel vorgesehen. Zu demselben Zweck kann zusätzlich oder alternativ ein magnetisierbares, insbesondere ferromagnetisches, Element an dem Kopplungsmittel vorgesehen, insbesondere in dieses eingelassen sein.

Vorzugsweise sind mindestens zwei Führungselemente auf gegenüberliegenden Längsseiten des Kopplungsmittels vorgesehen, um eine korrekte Ausrichtung der Vorrichtung in dem Setzroboter zu erleichtern.

Überdies kann das an dem Kopplungsmittel ausgebildete Führungselement auch zur Ausrichtung und/oder Führung der Vorrichtung an einem Trägerelement dienen.

Das Führungselement kann beispielsweise in Form eines prismenartigen oder walmdachartigen Vorsprungs an dem Kopplungsmittel ausgebildet sein. Es ist aber auch denkbar, dass das Führungselement eine Einkerbung an dem Kopplungsmittel darstellt.

Die Erfindung betrifft außerdem ein System umfassend wenigstens eine Vorrichtung der voranstehend beschriebenen Art und ein Trägerelement zur Aufnahme und Führung der wenigstens einen Vorrichtung. Vorzugsweise ist die Vorrichtung durch das Kopplungsmittel relativ zu dem Trägerelement beweglich geführt, wodurch die Vorrichtung auf einfache Wiese einem Setzroboter zugeführt werden kann.

Ein besonders hohes Maß an Gestaltungsfreiheit ergibt sich, wenn das Trägerelement zumindest abschnittsweise flexibel ausgebildet ist. Für bestimmte Anwendungsfälle kann das Trägerelement alternativ oder zusätzlich zumindest abschnittsweise starr ausgebildet sein. Überdies ist es denkbar, dass das Trägerelement rohrartig ausgebildet ist, derart das Trägerelement die gekoppelte Vorrichtung in radialer Richtung umgibt.

Nachfolgend wird die Erfindung rein beispielhaft anhand möglicher Ausführungsformen unter Bezugnahme auf die Zeichnung beschrieben. Es zeigen:
- Fig. 1A und 1B: perspektivische Ansichten einer Toleranzausgleichsvorrichtung gemäß einer ersten Ausführungsform der Erfindung;
- Fig. 2: eine Explosionsansicht der Toleranzausgleichsvorrichtung von Fig. 1;
- Fig. 3A: eine perspektivische Ansicht der Toleranzausgleichsvorrichtung von Fig. 1 in einem teilweise an einem Bauteil vormontierten Zustand;
- Fig. 3B: eine Draufsicht von unten auf die Toleranzausgleichsvorrichtung von Fig. 1 in einem teilweise an einem Bauteil vormontierten Zustand;
- Fig. 4: eine Draufsicht von unten auf die Toleranzausgleichsvorrichtung von Fig. 1 in einem vollständig an einem Bauteil vormontierten Zustand;
- Fig. 5A und 5B: perspektivische Ansichten mehrerer Toleranzausgleichsvorrichtungen von Fig. 1, welche auf einen T-förmigen Trägerelement aufgefädelt sind;
- Fig. 6A bis 6D: verschiedene Ansichten mehrerer Toleranzausgleichsvorrichtungen von Fig. 1, welche auf ein flexibles Trägerelement aufgefädelt sind;
- Fig. 7: eine Toleranzausgleichsvorrichtung gemäß einer zweiten Ausführungsform der Erfindung;
- Fig. 8: ein Magazin zur Aufnahme von Toleranzausgleichsvorrichtungen gemäß Fig. 1 oder 7;
- Fig. 9: eine Explosionsansicht einer Toleranzausgleichsvorrichtung gemäß einer dritten Ausführungsform;
- Fig. 10: eine perspektivische Ansicht der Toleranzausgleichsvorrichtung von Fig. 9 mit einer ersten Ausgestaltungsvariante eines Kopplungsmittels;
- Fig. 11: eine perspektivische Ansicht der Toleranzausgleichsvorrichtung von Fig. 9 mit einer nicht erfindungsgemäßen zweiten Ausgestaltungsvariante des Kopplungsmittels;
- Fig. 12: eine Draufsicht auf eine mit einem Trägerelement gekoppelte Toleranzausgleichsvorrichtung gemäß Fig. 10 oder 11;
- Fig. 13: eine perspektivische Ansicht der Toleranzausgleichsvorrichtung von Fig. 9 mit einer dritten Ausgestaltungsvariante des Kopplungsmittels;
- Fig. 14: eine perspektivische Ansicht der Toleranzausgleichsvorrichtung von Fig. 9 mit einer nicht erfindungsgemäßen vierten Ausgestaltungsvariante des Kopplungsmittels;
- Fig. 15: eine Draufsicht auf eine mit einem Trägerelement gekoppelte Toleranzausgleichsvorrichtung gemäß Fig. 13 oder 14;
- Fig. 16: eine perspektivische Ansicht einer Toleranzausgleichsvorrichtung gemäß einer nicht erfindungsgemäßen vierten Ausführungsform;
- Fig. 17: eine Draufsicht auf eine mit einem Trägerelement gekoppelte Toleranzausgleichsvorrichtung gemäß Fig. 16; und
- Fig. 18: eine perspektivische Ansicht eines Systems umfassend mehrere Toleranzausgleichsvorrichtungen von Fig. 1 und zwei Trägerelemente.

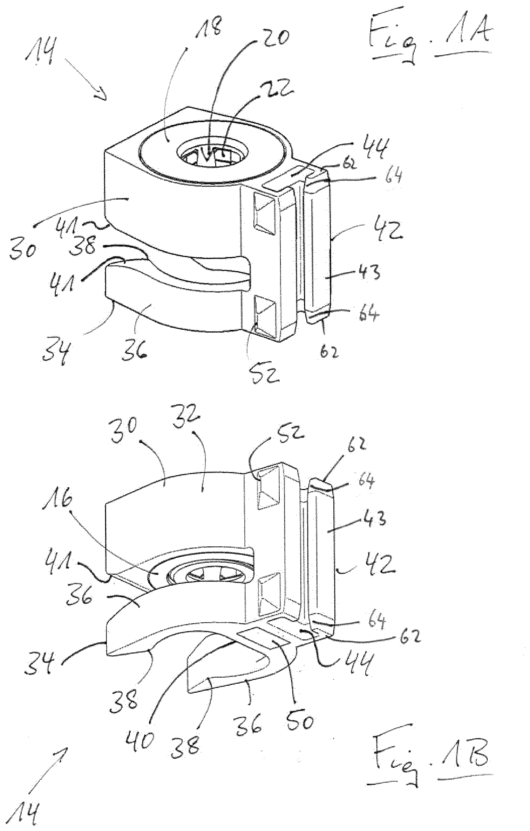

In Fig. 1 bis 4 ist eine Toleranzausgleichsvorrichtung 14 gemäß einer ersten Ausführungsform dargestellt. Die Toleranzausgleichsvorrichtung 14 umfasst ein Grundelement 16 sowie ein mit diesem in Linksgewindeeingriff stehendes Ausgleichselement 18. Das Grundelement 16 bildet zu diesem Zweck ein linksgängiges Innengewinde 16a aus, während das Ausgleichselement 18 ein entsprechend ausgebildetes Außengewinde 18a aufweist. Die Gewindeachsen des Innengewindes 16a und des Außengewindes 18a definieren eine axiale Richtung.

Das Grundelement 16 und das Ausgleichselement 18 bilden einen sich in der axialen Richtung erstreckenden Durchgang 20 für eine nicht dargestellte Verbindungsschraube aus. In den durch das Ausgleichselement 18 definierten Teil des Durchgangs 20 ist ein Federelement 22 eingesetzt, welches zur Herstellung eines Reibschlusses zwischen der sich durch den Durchgang 20 hindurch erstreckenden Verbindungsschraube und dem Ausgleichselement 18 vorgesehen ist. Das Federelement 22 überträgt ein Drehmoment der Verbindungsschraube auf das Ausgleichselement und wird deshalb auch als Drehmomentübertragungsmittel bezeichnet.

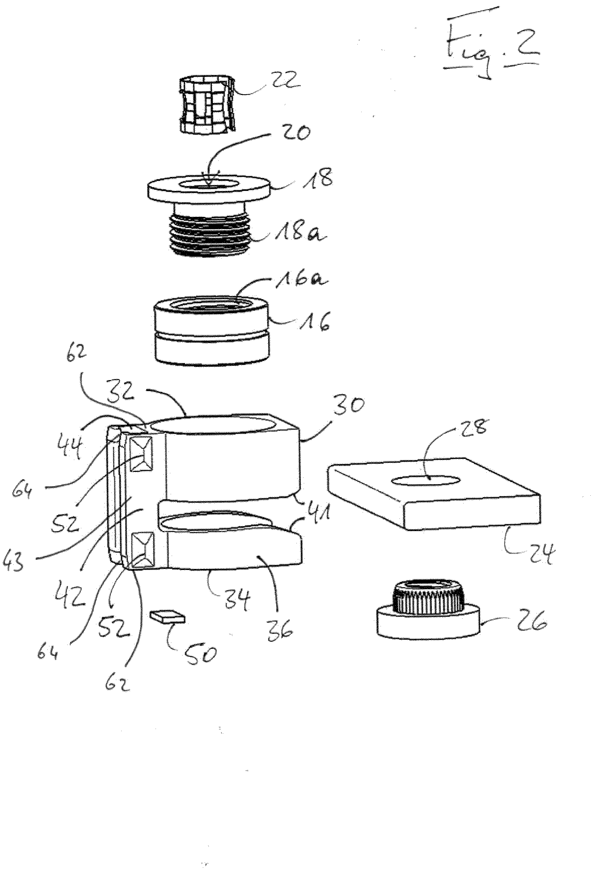

Die Verbindungsschraube dient zur Verschraubung zweier zueinander beabstandet angeordneter Bauteile, von denen in Fig. 2 ein erstes Bauteil 24 gezeigt ist. An dem ersten Bauteil 24 ist ein Mutternelement 26 für die Verbindungsschraube drehfest angebracht.

Im vorliegenden Ausführungsbeispiel handelt es sich bei dem Mutternelement 26 um eine Einpressmutter, welche in eine entsprechend vorgesehene Aufnahmebohrung 28 des ersten Bauteils 24 eingepresst ist. In diesem Kontext werden unter dem Begriff "Einpressmutter" auch Setzmuttern, Bliednietmuttern, Bördelmuttern, (Ein-)Schlagmuttern, etc. verstanden. Darüber hinaus ist es denkbar, das Mutternelement 26 auch auf andere Weise an dem ersten Bauteil 24 zu befestigen, beispielsweise mittels Kleben oder Schweißen.

Die Toleranzausgleichsvorrichtung 14 umfasst ferner ein aus einem Kunststoffmaterial gebildetes Halteelement 30, in welchem das Grundelement 16 drehfest gehalten ist. Im vorliegenden Ausführungsbeispiel ist das Grundelement 16 in das Halteelement 30 eingepresst. Es ist aber ebenso denkbar, das Grundelement 16 in das Halteelement 30 einzukleben oder das Halteelement 30 auf das Grundelement 16 aufzuschrumpfen oder aufzuspritzen. Konkret sitzt das Grundelement 16 in einem Halteabschnitt 32 des Halteelements 30, welcher sich im Wesentlichen rechtwinklig zu der axialen Richtung erstreckt.

Des Weiteren bildet das Halteelement 30 einen Rastabschnitt 34 aus, welcher sich ebenfalls im Wesentlichen rechtwinklig zu der axialen Richtung erstreckt. Der Rastabschnitt 34 weist einen axialen Abstand zu dem Halteabschnitt 32 auf, der an die Stärke bzw. Dicke des ersten Bauteils 24 angepasst ist.

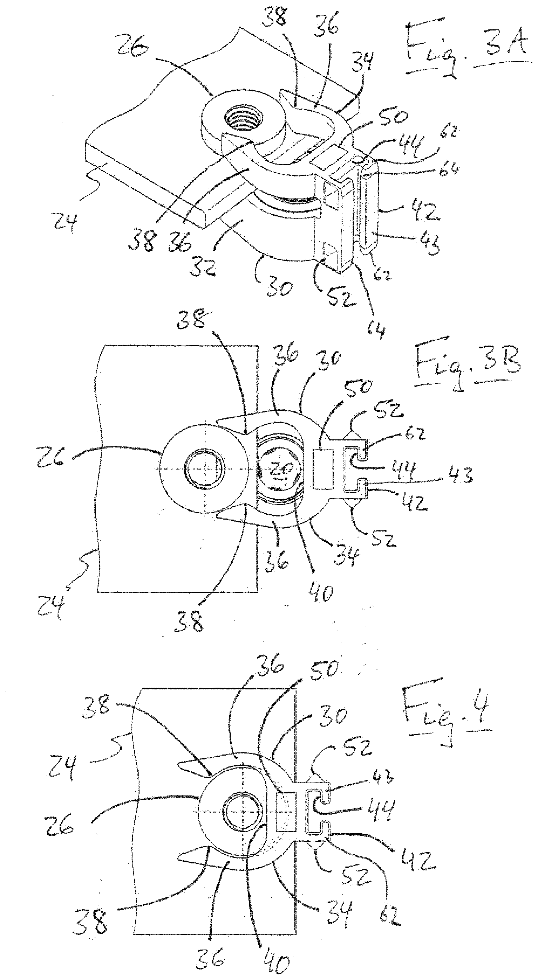

Der Rastabschnitt 34 umfasst zwei zueinander beabstandete, leicht aufeinander zu gekrümmte Rastarme 36, welche zwischen sich eine Aufnahme für das Mutternelement 26 definieren. Die Rastarme 36 weisen eine gewisse Elastizität derart auf, dass sie sich beim Aufschieben in radialer Richtung auf das Mutternelement 26 entgegen einer Rückstellkraft aufspreizen lassen und wieder in ihrer Ruhelage zurückfedern, sobald das Mutternelement 26 in der Aufnahme aufgenommen ist (Fig. 4). Um ein unbeabsichtigtes Lösen des Rastabschnitts 34 von dem aufgenommenen Mutternelement 26 zu verhindern, weisen die Rastarme 36 im Bereich ihrer freien Enden einander zugewandte Rastvorsprünge 38 auf. Für eine Versteifung der Rastarme 36 sind diese im Bereich ihrer Basis durch ein Versteifungselement 40 verbunden, welches das in der Aufnahme aufgenommene Mutternelement 26 teilweise überragt.

Für die Vormontage der Toleranzausgleichsvorrichtung 14 an dem ersten Bauteil 24 wird die Toleranzausgleichsvorrichtung 14 seitlich, das heißt also in radialer Richtung, derart auf das erste Bauteil 24 aufgeschoben, dass das erste Bauteil zwischen dem Halteabschnitt 32 und dem Rastabschnitt 34 aufgenommen wird und der Rastabschnitt 34 mit dem Mutternelement 26 verrastet, wie es in Fig. 3 und 4 dargestellt ist. Um das Aufschieben der Toleranzausgleichsvorrichtung 14 auf das erste Bauteil 24 zu erleichtern, sind sowohl im Bereich der freien Enden der Rastarme 36 als auch in dem korrespondierenden Bereich des Halteabschnitts 32 Einführschrägen 41 ausgebildet.

Die Toleranzausgleichsvorrichtung 14 braucht im vormontierten Zustand nicht notwendigerweise spielfrei an dem Bauteil 24 zu sitzen. Vielmehr ist ein gewisses Spiel der an dem Mutternelement 26 verrasteten Toleranzausgleichsvorrichtung 14 zumindest in radialer Richtung, unter Umständen aber auch in axialer Richtung, erwünscht, da hierdurch die nachfolgende Verschraubung der Bauteile, insbesondere die Ausrichtung der Toleranzausgleichsvorrichtung 14 mit der Verbindungsschraube, erleichtert wird.

Zur Verschraubung der Bauteile wird die Verbindungsschraube durch eine entsprechende Bohrung des nicht dargestellten Bauteils hindurch gesteckt und (in Fig. 1 von oben) durch den Durchgang 20 der Toleranzausgleichsvorrichtung 14 hindurch geführt und in das Mutternelement 26 eingeschraubt. Aufgrund der gegenläufigen Gewinde von Verbindungsschraube und Toleranzausgleichsvorrichtung 14 wird während des Einschraubens der Verbindungsschraube in das Mutternelement 26 das Ausgleichselement 18 durch den durch das Federelement 22 hergestellten Reibschluss aus dem Grundelement 16 herausgedreht, bis es an dem nicht dargestellten zweiten Bauteil anstößt. Ab diesem Zeitpunkt ist der Abstand zwischen den Bauteilen durch die ausgefahrene Toleranzausgleichsvorrichtung 14 überbrückt und die Bauteile können durch Anziehen der Verbindungsschraube miteinander verspannt werden.

Der Halteabschnitt 32 und der Rastabschnitt 34 sind durch einen sich in der axialen Richtung erstreckenden Verbindungsabschnitt 42 miteinander verbunden, welcher gewissermaßen das Rückgrat des Halteelements 30 bildet. Der Verbindungsabschnitt 42 weist eine quaderförmige Grundform auf und bildet an seiner den Rastarmen 36 abgewandten Rückseite einer T-Nut 44 aus. Der Verbindungsabschnitt 42 bildet ein Kopplungsmittel 43, auf dessen Funktionsweise nachstehend noch genauer eingegangen wird.

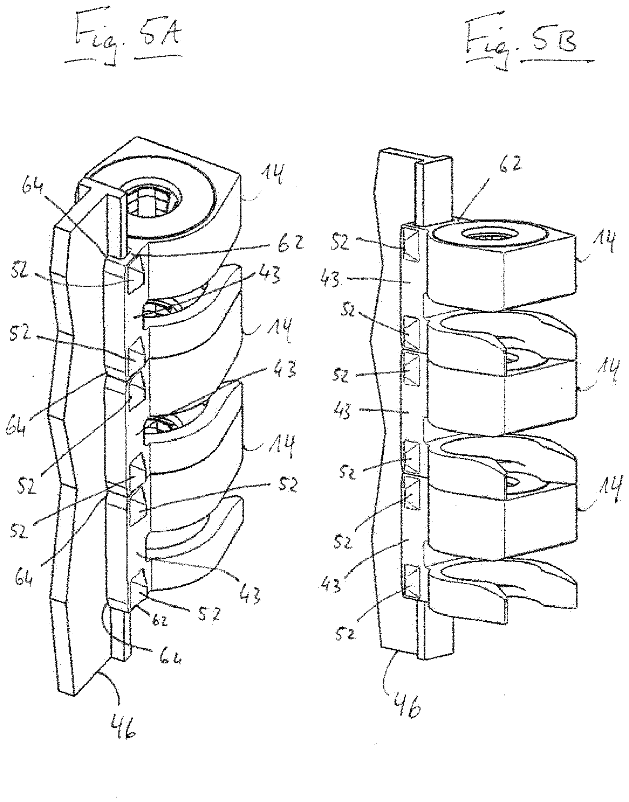

Mittels der T-Nut 44 lässt sich die Toleranzausgleichsvorrichtung 14 zu Transport- und/oder Lagerzwecken auf ein entsprechend ausgebildetes T-förmiges Trägerelement 46 aufschieben, wie es in Fig. 5 anhand von drei Toleranzausgleichsvorrichtungen 14 dargestellt ist.

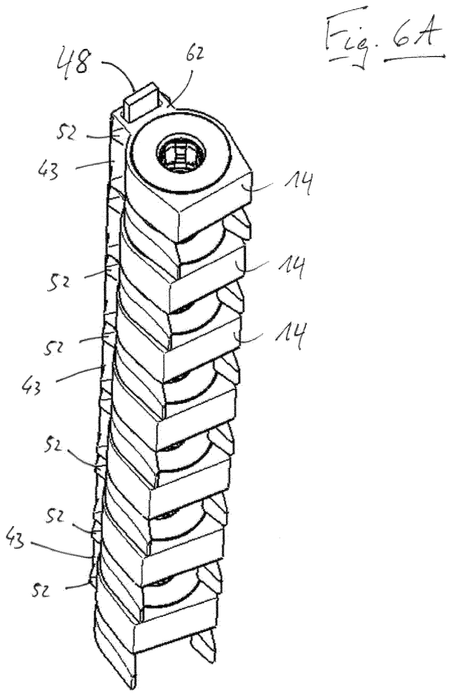

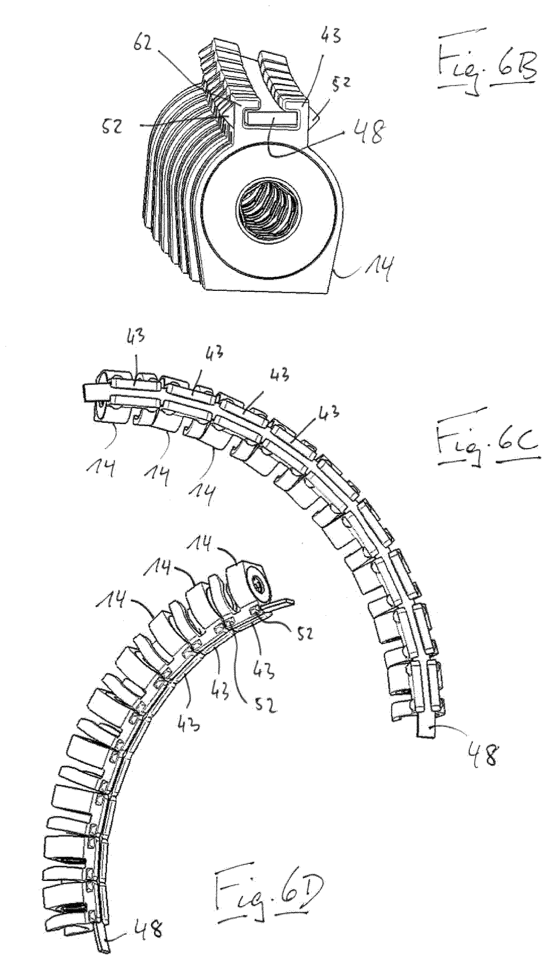

Alternativ ermöglicht die T-Nut 44 ein Auffädeln der Toleranzausgleichsvorrichtung 14 auf ein flexibles Trägerelement in Form eines Trägerbandes 48. Fig. 6 zeigt ein derartiges Trägerband 48 mit einer Vielzahl von darauf aufgefädelten Toleranzausgleichsvorrichtungen 14. Eine solche Konfiguration eignet sich beispielsweise, um die Toleranzausgleichsvorrichtungen 14 einem Setzroboter für eine automatisierte Vormontage der Toleranzausgleichsvorrichtungen 14 an einem oder mehreren Bauteilen 24 zuzuführen.

Grundsätzlich kann es sich bei einem solchen Setzroboter um einen Greifroboter handeln. Alternativ oder zusätzlich kann der Setzroboter aber auch über einen Magneten zum Halten der Toleranzausgleichsvorrichtungen 14 verfügen. Für ein Zusammenwirken mit dem Magneten des Roboters ist ein Einsatz 50 aus einem magnetisierbaren, insbesondere ferromagnetischen, Material, beispielsweise einem Stahlblech, in das Halteelement 30 eingelassen, im vorliegenden Ausführungsbeispiel im Bereich zwischen der T-Nut 44 und dem Versteifungselement 40. Überdies kann ein magnetisierbares, insbesondere ferromagnetisches, Element an dem Kopplungsmittel 43 vorgesehen sein und vorzugsweise in das Kopplungsmittel 43 eingelassen sein (in den Figuren nicht dargestellt).

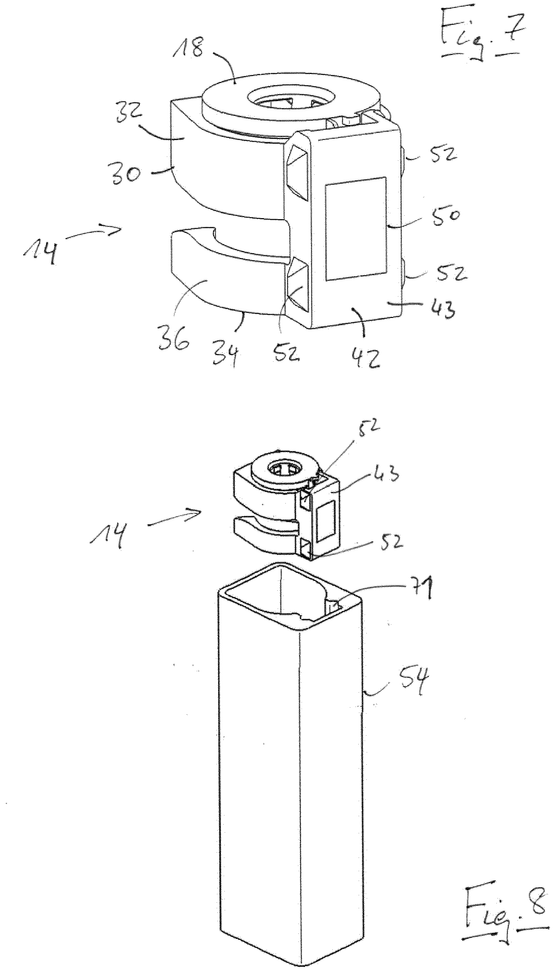

An gegenüberliegenden Außenseiten des Verbindungsabschnitts 42 sind außerdem jeweils zwei axial beabstandete prismenartige oder walmdachartige Führungselemente 52 vorgesehen, die der zusätzlichen Führung der Toleranzausgleichsvorrichtung 14 in einem Trägerelement in Form eines Magazins 54 dienen (Fig. 8).

Fig. 7 zeigt eine Toleranzausgleichsvorrichtung 14 gemäß einer zweiten Ausführungsform, welche sich letztlich nur darin von der voranstehend beschriebenen ersten Ausführungsform unterscheidet, dass das Halteelement 30 keine T-Nut 44 aufweist, sondern stattdessen der Einsatz 50 aus ferromagnetischem Material in die den Rastarmen 36 abgewandte Rückseite des Verbindungsabschnitts 42 eingelassen ist. Wie zuvor dienen die Führungselemente 52 zur Führung der Toleranzausgleichsvorrichtung 14 in dem Magazin 54.

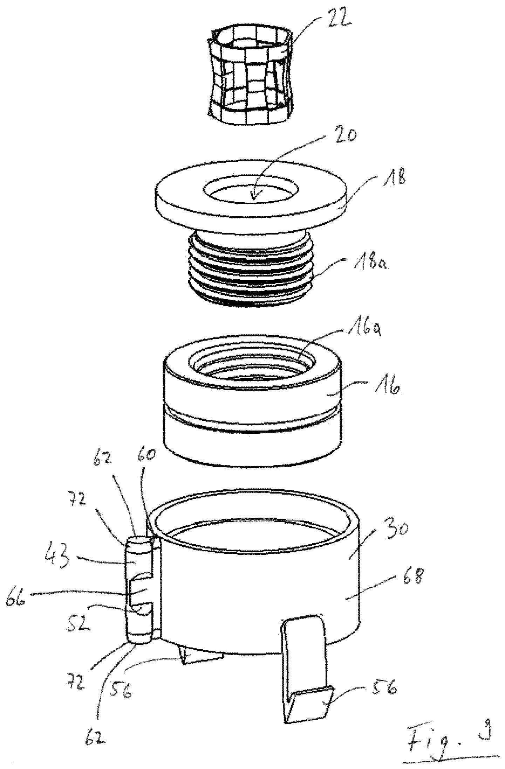

Fig. 9 bis 15 zeigen eine Toleranzausgleichsvorrichtung 14 gemäß einer dritten Ausführungsform, welche sich in der Ausgestaltung des Halteelements 30 sowie des Kopplungsmittels 43 von der Toleranzausgleichsvorrichtung 14 gemäß der ersten Ausführungsform unterscheidet. Das Halteelement 30 gemäß der Toleranzausgleichsvorrichtung 14 gemäß der dritten Ausführungsform ist im Wesentlichen ringartig ausgestaltet und weist zwei in axialer Richtung von dem Halteelement 30 abstehende Clipsarme 56 auf. Die Clipsarme 56 dienen zur Befestigung der Toleranzausgleichsvorrichtung 14 an einem entsprechend ausgebildeten ersten Bauteil.

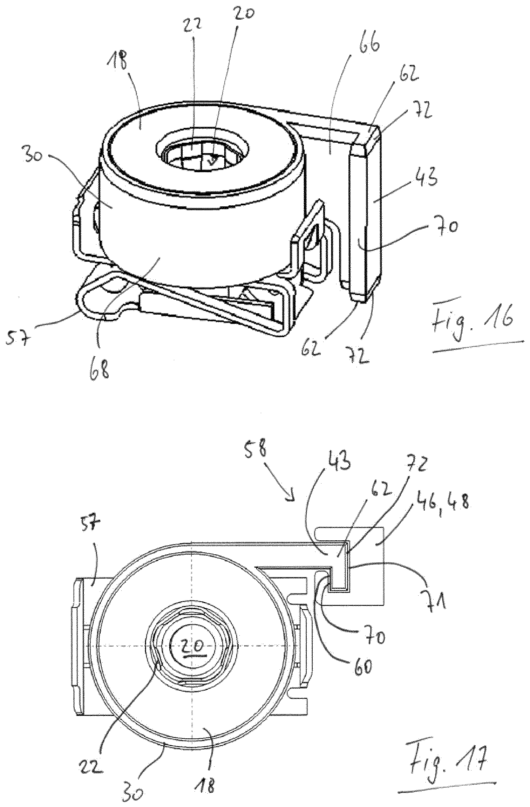

Fig. 16 und 17 zeigen eine Toleranzausgleichsvorrichtung 14 gemäß einer vierten Ausführungsform, welche sich lediglich in der Ausgestaltung des Halteelements 30 und des Kopplungsmittels 43 von der Toleranzausgleichsvorrichtung 14 gemäß der dritten Ausführungsform unterscheidet. Bei der Toleranzausgleichsvorrichtung 14 gemäß der vierten Ausführungsform ist eine Halteklammer 57 an dem Halteelement 30 angebracht. In der Halteklammer 57 ist zum einen ein in den Figuren nicht erkennbares Mutternelement für die Verbindungsschraube gelagert. Zum anderen dient die Halteklammer 57 zum Anklemmen der Toleranzausgleichsvorrichtung 14 an ein erstes Bauteil.

Die Ausgestaltung der jeweiligen Kopplungsmittel 43 der Toleranzausgleichsvorrichtungen 14 gemäß der dritten und vierten Ausführungsform wird nachstehend mit Bezug auf die jeweiligen Figuren genauer erläutert.

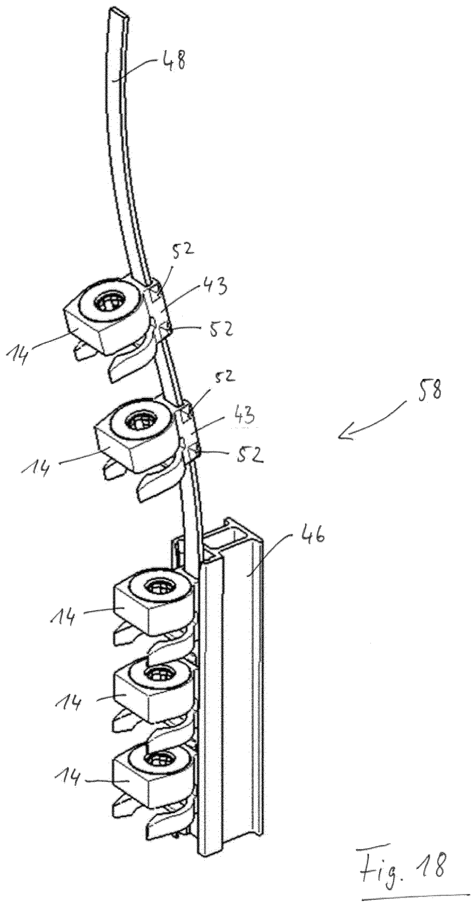

Das Kopplungsmittel 43 ist dazu ausgebildet, die Toleranzausgleichsvorrichtung 14 mit einem Trägerelement 46, 48, 54 derart zu koppeln, dass die Toleranzausgleichsvorrichtung 14 entlang des Trägerelements 46, 48, 54 bewegt werden kann. Dabei kann es sich bei dem Trägerelement um ein starres Trägerelement 46 (Fig. 5A und 5B) oder ein flexibles Trägerelement 48 (Fig. 6A bis 6D) handeln. Überdies ist auch eine Kombination von starren und flexiblen Trägerelementen 46, 48 denkbar, so wie es beispielsweise in Fig. 18 dargestellt ist. Weiterhin ist auch ein rohrartig ausgebildetes Trägerelement 54 denkbar, welches die gekoppelten Toleranzausgleichsvorrichtungen 14 radial umgibt (Fig. 8). Ein solches rohrartiges Trägerelement 54 kann insbesondere als ein Vorratsmagazin für mehrere Toleranzausgleichsvorrichtungen 14 dienen.

In all diesen Fällen bilden das Trägerelement 46, 48, 54 und mindestens eine damit gekoppelte Toleranzausgleichsvorrichtung 14 ein System 58, in welchem das Trägerelement 46, 48, 54 zur Aufnahme und Führung von wenigstens einer Toleranzausgleichsvorrichtung 14 dient.

Umfasst das System 58 mehrere unterschiedliche Trägerelemente 46, 48 so können die einzelnen Trägerelemente 46, 48 für eine kontinuierliche Führung der Toleranzausgleichsvorrichtungen 14 ineinander übergehen, wie es anhand von Fig. 18 zu erkennen ist. Dabei tragen zur Führung der einzelnen Toleranzausgleichsvorrichtungen 14 sowohl das Kopplungsmittel 43 als auch die an dem Kopplungsmittel 43 ausgebildeten walmdachartigen Führungselemente 52 bei. In dem in Fig. 18 dargestellten Ausführungsbeispiel dienen die Kopplungsmittel 43 zur Führung der jeweiligen Toleranzausgleichsvorrichtung 14 an dem flexibel ausgebildeten Trägerelement 48, während die Führungselemente 52 zur Führung der Toleranzausgleichsvorrichtung 14 an dem starr ausgebildeten Trägerelement 46 dienen.

Nachfolgend werden nun die verschiedenen Kopplungsmittel 43 genauer erläutert. In den Zeichnungen ist das Kopplungsmittel 43 jeweils an dem Halteelement 30 ausgebildet. Es ist aber auch denkbar, das Kopplungsmittel 43 an dem Grundelement 16 oder sogar an dem Ausgleichselement 18 vorzusehen.

Wie anhand der Zeichnungen zu erkennen ist, weist das Kopplungsmittel 43 jeweils eine Längserstreckung auf, welche zumindest annähernd parallel zu dem die axiale Richtung definierenden Durchgang 20 ausgerichtet sind. Grundsätzlich kann die Längserstreckung eines Kopplungsmittels 43 aber auch quer, insbesondere rechtwinklig, zur axialen Richtung ausgerichtet sein.

Die in den Fig. 1 bis 6D und 18 dargestellten Toleranzausgleichsvorrichtungen 14 weisen jeweils ein Kopplungsmittel 43 auf, welches eine mindestens einen Hinterschnitt 60 definierende Nut 44 umfasst. In den in Fig. 1 bis 6D und 18 dargestellten Ausführungsbeispielen weist die Nut 44 jeweils zwei Hinterschnitte 60 auf und ist somit als T-Nut ausgebildet. Die Nut 44 könnte aber auch als L-Nut, Rundnut, Schwalbenschwanznut oder dergleichen ausgebildet sein.

Damit die Toleranzausgleichsvorrichtung 14 leichter auf ein Trägerelement 46, 48, 54 aufgefädelt werden kann, weist die Nut 44 an jeweils gegenüberliegenden Längsenden 62 einen sich aufweitenden Abschnitt 64 auf.

Gemäß einer alternativen Ausgestaltung kann das Kopplungsmittel 43 auch in Form eines mindestens einen Hinterschnitt 60 definierenden Arms 66 ausgebildet sein. Der Arm 66 kann sich von einer Außenwand 68 des Halteelements 30 radial nach außen erstrecken (Fig. 9 bis 15). Gemäß einer in Fig. 16 und 17 dargestellten Variante kann sich der Arm 66 auch tangential von der Außenwand 68 des Halteelements 30 wegerstrecken.

Ist das Kopplungsmittel 43 an dem Grundelement 16 oder Ausgleichselement 18 vorgesehen, so kann sich der Arm 66 von der jeweiligen Außenwand des Grundelements 16 bzw. Auslgeichselements 18 tangential oder radial wegerstrecken.

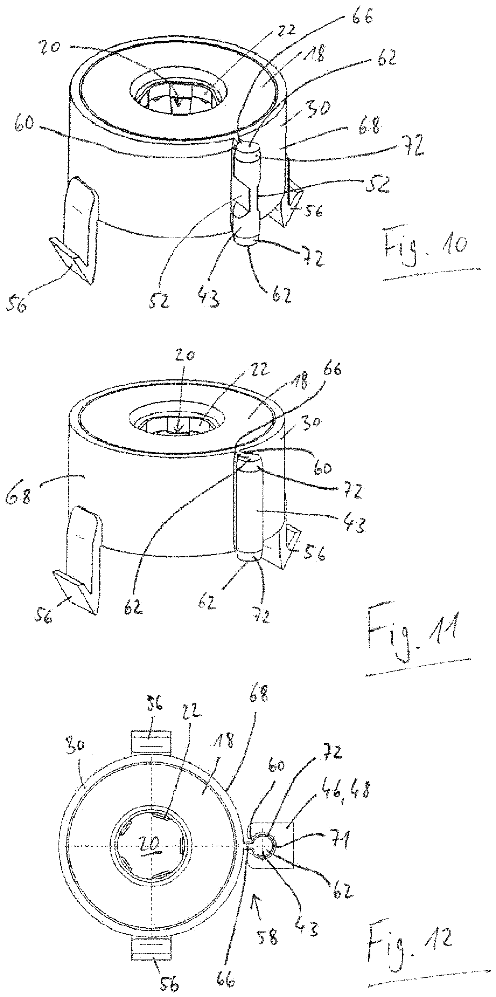

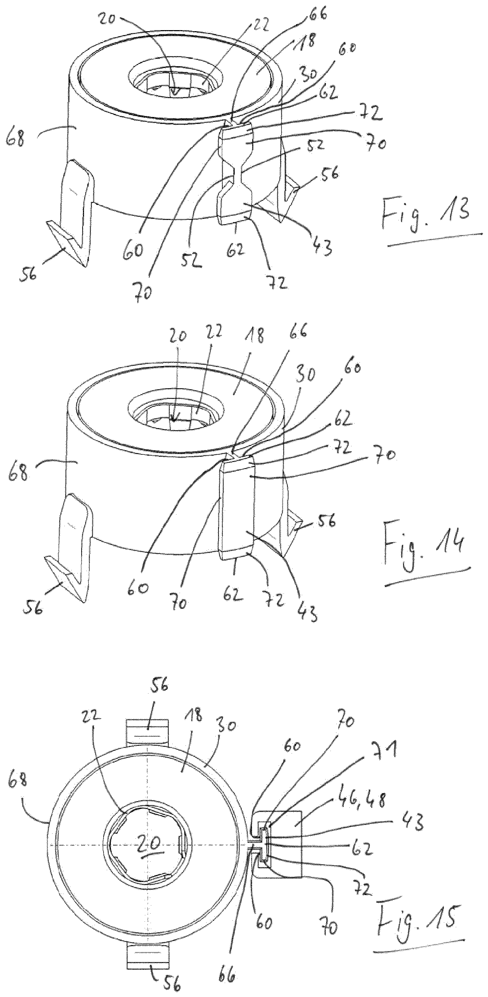

Wie anhand von Fig. 9 bis 11 und besonders anhand der Querschnittsdarstellung in Fig. 12 zu erkennen ist, kann der den Hinterschnitt 60 definierende Arm 66 einen runden bzw. pilzartigen Querschnitt aufweisen. Alternativ kann der Arm 66 an seinem der Außenwand 68 abgewandten freien Ende auch in mindestens einen abgewinkelten Hakenabschnitt 70 übergehen, so dass das Kopplungsmittel 43 insgesamt einen T-förmigen Querschnitt (Fig. 15) oder einen L-förmigen Querschnitt (Fig. 17) aufweist. Es sind aber auch andere Querschnittsformen des Kopplungsmittels 43 denkbar, wie zum Beispiel ein schwalbenschwanzartiger Querschnitt. Es versteht sich, dass das Kopplungsmittel 43 in einem gekoppelten Zustand der Toleranzausgleichsvorrichtung 14 in einer komplementär ausgebildeten Nut 71 des Trägerelements 46, 48, 54 geführt ist.

Zum leichteren Einfädeln der Toleranzausgleichsvorrichtung 14 weisen die in den Fig. 9 bis 17 dargestellten Toleranzausgleichsvorrichtungen 14 jeweils an ihren Längsenden 62 einen sich verjüngenden Abschnitt 72 auf.

Damit ein in den Figuren nicht dargestellter Setzroboter die Toleranzausgleichsvorrichtung 14 besser greifen und ausrichten kann, sind an dem Kopplungsmittel 43 Führungselemente 52 vorgesehen. Die Führungselemente 52 können an dem Kopplungsmittel 43 walmdachartig hervorstehen, wie es beispielsweise anhand von Fig. 1A und 1B gut zu erkennen ist. Es ist aber auch möglich, dass die Führungselemente 52 an dem Kopplungsmittel 43 in Form von Einkerbungen ausgebildet sind (Fig. 9, 10 und 13).

### Bezugszeichenliste

- 14: Toleranzausgleichsvorrichtung
- 16: Grundelement
- 18: Ausgleichselement
- 16a: Innengewinde
- 18a: Außengewinde
- 20: Durchgang
- 22: Federelement
- 24: erstes Bauteil
- 26: Mutternelement
- 28: Aufnahmebohrung
- 30: Halteelement
- 32: Halteabschnitt
- 34: Rastabschnitt
- 36: Rastarm
- 38: Rastvorsprung
- 40: Versteifungselement
- 41: Einführschräge
- 42: Verbindungsabschnitt
- 43: Kopplungsmittel
- 44: T-Nut
- 46: T-Träger
- 48: Trägerband
- 50: Einsatz
- 52: Führungselement
- 54: Magazin
- 56: Clipsarme
- 57: Halteklammer
- 58: System
- 60: Hinterschnitt
- 62: Längsende
- 64: aufgeweiteter Abschnitt
- 66: Arm
- 68: Außenwand
- 70: Hakenabschnitt
- 71: Nut
- 72: verjüngter Abschnitt

## Patentansprüche

1. Vorrichtung (14) zum Ausgleichen von Toleranzen zwischen zwei mittels einer Verbindungsschraube zu verbindenden Bauteilen, umfassend ein Grundelement (16), ein aus dem Grundelement (16) herausbewegbares Ausgleichselement (18), wobei das Grundelement (16) und das Ausgleichselement (18) einen eine axiale Richtung definierenden Durchgang (20) für die Verbindungsschraube ausbilden, und ein Kopplungsmittel (43), welches dazu ausgebildet ist, die Vorrichtung (14) mit einem Trägerelement (46, 48, 54) zu koppeln und die Vorrichtung (14) entlang des Trägerelements (46, 48, 54) zu führen,
**dadurch gekennzeichnet, dass**
ein Führungselement (52) an dem Kopplungsmittel (43) vorgesehen ist, damit ein Setzroboter die Vorrichtung (14) besser greifen kann.

2. Vorrichtung (14) nach Anspruch 1,
**dadurch gekennzeichnet, dass**
das Kopplungsmittel (43) an dem Grundelement (16) ausgebildet ist.

3. Vorrichtung (14) nach Anspruch 1,
**dadurch gekennzeichnet, dass**
das Kopplungsmittel (43) an einem Halteelement (30) zum Halten des Grundelements (16) ausgebildet ist.

4. Vorrichtung (14) nach Anspruch 1 bis 3,
**dadurch gekennzeichnet, dass**
das Kopplungsmittel (43) eine Längserstreckung aufweist, welche zumindest annähernd parallel zur axialen Richtung ausgerichtet ist.

5. Vorrichtung (14) nach zumindest einem der vorstehenden Ansprüche,
**dadurch gekennzeichnet, dass**
das Kopplungsmittel (43) eine mindestens einen Hinterschnitt (60) definierende Nut (44) umfasst.

6. Vorrichtung (14) nach Anspruch 5,
**dadurch gekennzeichnet, dass**
die Nut (44) eine T-Nut, eine L-Nut, eine Rundnut, eine Schwalbenschwanznut oder dergleichen ist.

7. Vorrichtung (14) nach Anspruch 5 oder 6,
**dadurch gekennzeichnet, dass**
die Nut (44) an mindestens einem ihrer Längsenden (62) einen sich aufweitenden Abschnitt (64) aufweist.

8. Vorrichtung (14) nach zumindest einem der Ansprüche 1 oder 2,
**dadurch gekennzeichnet, dass**
das Kopplungsmittel (43) einen mindestens einen Hinterschnitt (60) definierenden Arm (66) umfasst, welcher sich von einer Außenwand (68) des Grundelements (16) radial oder tangential wegerstreckt.

9. Vorrichtung (14) nach Anspruch 3,
**dadurch gekennzeichnet, dass**
das Kopplungsmittel (43) einen mindestens einen Hinterschnitt (60) definierenden Arm (66) umfasst, welcher sich von einer Außenwand (68) des Halteelements (30) radial oder tangential wegerstreckt.

10. Vorrichtung (14) nach Anspruch 8 oder 9,
**dadurch gekennzeichnet, dass**
das Kopplungsmittel (43) an mindestens einem seiner Längsenden einen sich verjüngenden Abschnitt (72) aufweist.

11. Vorrichtung (14) nach zumindest einem der Ansprüche 8 bis 10,
**dadurch gekennzeichnet, dass**
der Arm (66) an seinem der Außenwand (68) abgewandten freien Ende in mindestens einen abgewinkelten Hakenabschnitt (70) übergeht.

12. Vorrichtung (14) nach zumindest einem der Ansprüche 8 bis 11,
**dadurch gekennzeichnet, dass**
das Kopplungsmittel (43) einen T-förmigen, L-förmigen, runden, insbesondere pilzartigen oder schwalbenschwanzartigen Querschnitt aufweist.

13. Vorrichtung (14) nach zumindest einem der vorstehenden Ansprüche,
**dadurch gekennzeichnet, dass**
ein magnetisierbares, insbesondere ferromagnetisches, Element an dem Kopplungsmittel (43) vorgesehen ist, insbesondere in das Kopplungsmittel (43) eingelassen ist.

14. System (58) umfassend wenigstens eine Vorrichtung (14) nach zumindest einem der Ansprüche 1 bis 13 und ein Trägerelement (46, 48, 54) zur Aufnahme und Führung der wenigstens einen Vorrichtung (14), insbesondere wobei
die Vorrichtung (14) durch das Kopplungsmittel (43) relativ zu dem Trägerelement (46, 48, 54) beweglich geführt ist und/oder das Trägerelement (46, 48, 54) zumindest abschnittsweise flexibel und/oder zumindest abschnittsweise starr ausgebildet ist.

## Claims

1. A device (14) for compensating for tolerances between two components which are to be connected by a connecting screw, comprising a base element (16), a compensating element (18) which can be moved out of the base element (16), wherein the base element (16) and the compensating element (18) form a passage (20) for the connecting screw that defines an axial direction, and a coupling means (43) which is designed to couple the device (14) to a carrier element (46, 48, 54) and to guide the device (14) along the carrier element (46, 48, 54),
**characterized in that**
a guide element (52) is provided on the coupling means (43) so that a setting robot can better grip the device (14).

2. A device (14) according to claim 1,
**characterized in that**
the coupling means (43) is formed on the base element (16).

3. A device (14) according to claim 1,
**characterized in that**
the coupling means (43) is formed on a retaining element (30) for retaining the base element (16).

4. A device (14) according to claims 1 to 3,
**characterized in that**
the coupling means (43) has a longitudinal extension which is oriented at least approximately parallel to the axial direction.

5. A device (14) according to at least one of the preceding claims, **characterized in that**
the coupling means (43) comprises a slot (44) which defines at least one undercut (60).

6. A device (14) according to claim 5,
**characterized in that**
the slot (44) is a T-slot, an L-slot, a round slot, a dovetail slot or similar.

7. A device (14) according to claim 5 or 6,
**characterized in that**
the slot (44) has a widening portion (64) on at least one of the longitudinal ends (62) thereof.

8. A device (14) according to at least one of the claims 1 or 2,
**characterized in that**
the coupling means (43) comprises an arm (66) which defines at least one undercut (60) and which extends radially or tangentially away from an outer wall (68) of the base element (16).

9. A device (14) according to claim 3,
**characterized in that**
the coupling means (43) comprises an arm (66) which defines at least one undercut (60) and which extends radially or tangentially away from an outer wall (68) of the retaining element (30).

10. A device (14) according to claim 8 or 9,
**characterized in that**
the coupling means (43) has a tapering portion (72) on at least one of the longitudinal ends thereof.

11. A device (14) according to at least one of the claims 8 to 10, **characterized in that**
the arm (66) transitions into at least one angled hook portion (70) at the free end thereof which faces away from the outer wall (68).

12. A device (14) according to at least one of the claims 8 to 11,
**characterized in that**
the coupling means (43) has a cross section which is T-shaped, L-shaped, round, in particular in the shape of a mushroom or dovetail.

13. A device (14) according to at least one of the preceding claims, **characterized in that**
a magnetizable, in particular ferromagnetic, element is provided on the coupling means (43), in particular is recessed in the coupling means (43).

14. A system (58) comprising at least one device (14) according to at least one of claims 1 to 13 and a carrier element (46, 48, 54) for receiving and guiding the at least one device (14),
in particular wherein
the device (14) is movably guided relative to the carrier element (46, 48, 54) by the coupling means (43), and/or
the carrier element (46, 48, 54) is flexible at least in portions and/or is rigid at least in portions.

## Revendications

1. Dispositif (14) destiné à compenser des tolérances entre deux composants à relier au moyen d'une vis d'assemblage, comprenant un élément de base (16) et un élément de compensation (18) susceptible de sortir de l'élément de base (16), l'élément de base (16) et l'élément de compensation (18) formant un passage (20) pour la vis d'assemblage, lequel définit une direction axiale, et un moyen de couplage (43) conçu pour coupler le dispositif (14) à un élément de support (46, 48, 54) et pour guider le dispositif (14) le long de l'élément de support (46, 48, 54),
**caractérisé en ce que**
un élément de guidage (52) est prévu sur le moyen de couplage (43) pour permettre à un robot de pose de mieux saisir le dispositif (14).

2. Dispositif (14) selon la revendication 1,
**caractérisé en ce que**
le moyen de couplage (43) est réalisé sur l'élément de base (16).

3. Dispositif (14) selon la revendication 1,
**caractérisé en ce que**
le moyen de couplage (43) est réalisé sur un élément de retenue (30) destiné à retenir l'élément de base (16).

4. Dispositif (14) selon les revendications 1 à 3,
**caractérisé en ce que**
le moyen de couplage (43) présente une extension longitudinale orientée au moins approximativement parallèlement à la direction axiale.

5. Dispositif (14) selon l'une au moins des revendications précédentes, **caractérisé en ce que**
le moyen de couplage (43) présente une rainure (44) définissant au moins une contre-dépouille (60).

6. Dispositif (14) selon la revendication 5,
**caractérisé en ce que**
la rainure (44) est une rainure en T, une rainure en L, une rainure ronde, une rainure en queue d'aronde ou similaire.

7. Dispositif (14) selon la revendication 5 ou 6,
**caractérisé en ce que**
la rainure (44) présente une portion évasée (64) à au moins une de ses extrémités longitudinales (62).

8. Dispositif (14) selon l'une au moins des revendications 1 ou 2, **caractérisé en ce que**
le moyen de couplage (43) comprend un bras (66) qui définit au moins une contre-dépouille (60) et qui s'étend radialement ou tangentiellement à partir d'une paroi extérieure (68) de l'élément de base (16).

9. Dispositif (14) selon la revendication 3,
**caractérisé en ce que**
le moyen de couplage (43) comprend un bras (66) qui définit au moins une contre-dépouille (60) et qui s'étend radialement ou tangentiellement à partir d'une paroi extérieure (68) de l'élément de retenue (30).

10. Dispositif (14) selon la revendication 8 ou 9,
**caractérisé en ce que**
le moyen de couplage (43) présente, à l'une au moins de ses extrémités longitudinales, une portion (72) qui va en se rétrécissant.

11. Dispositif (14) selon l'une au moins des revendications 8 à 10, **caractérisé en ce que**
le bras (66) se prolonge, à son extrémité libre détournée de la paroi extérieure (68), par au moins une portion coudée formant crochet (70).

12. Dispositif (14) selon l'une au moins des revendications 8 à 11, **caractérisé en ce que**
le moyen de couplage (43) présente une section transversale en forme de T, en forme de L, ronde, en particulier en forme de champignon ou en forme de queue d'aronde.

13. Dispositif (14) selon l'une au moins des revendications précédentes, **caractérisé en ce que**
un élément magnétisable, en particulier ferromagnétique, est prévu sur le moyen de couplage (43), en particulier encastré dans le moyen de couplage (43).

14. Système (58) comprenant au moins un dispositif (14) selon l'une au moins des revendications 1 à 13 et un élément de support (46, 48, 54) destiné à recevoir et guider ledit au moins un dispositif (14),
en particulier, le dispositif (14) étant guidé par le moyen de couplage (43) de manière mobile par rapport à l'élément de support (46, 48, 54), et/ou l'élément de support (46, 48, 54) étant conçu de manière flexible au moins localement et/ou de manière rigide au moins localement.
